# EUROPEAN PATENT SPECIFICATION

(11) **EP 1 638 358 B1**
(45) Date of publication and mention of the grant of the patent: **19.12.2007**
(21) Application number: 05019352.3
(22) Date of filing: 06.09.2005
(51) Int. Cl.: H04Q 7/38

(54) **Method for monitoring paging channel of packet switched service**
Verfahren zur Überwachung vom Rufkanal eines packetvermittelten Dienstes
Méthode pour la surveillance d'un canal d'appel d'un service de commutation par paquets

(30) Priority: 16.09.2004 KR 2004074290
(43) Date of publication of application: 22.03.2006
(73) Proprietor: LG Electronics Inc., Yongdungpo-gu Seoul (KR)
(72) Inventor: Lee, Sung-Kyu, Dongan-Gu, Anyang, Gyeonggi-Do (KR)
(74) Representative: Katérle, Axel

(56) References cited:
- EP-A- 1 035 749
- US-A- 5 745 695

## Description

### BACKGROUND OF THE INVENTION

### 1. Field of the Invention

The present invention relates to a packet switched service such as a GPRS (General Packet Radio Service) and, more particularly, to a method for monitoring a paging channel of the packet switched service.

### 2. Description of the Background Art

As a multimedia communication service fledges in full scale, services that simultaneously use a GPRS channel and a GSM (Global System for Mobile communication) channel, such as an MMS (Multimedia Messaging Service)/IM (Instant Messaging)/PTT(Push To Talk), etc., are increasing, and in line with this, the importance of a monitoring process for circuit switched (CS) paging during packet data transmission is increasing and mobile communication service providers increasingly request the monitoring process for the circuit switched paging.

Most mobile communication networks are operated in a network operation mode II, and a class B mobile terminal must monitor a CS paging channel during packet data transmission. Without monitoring the CS paging channel during packet data transmission, the mobile terminal cannot receive an MT (Mobile Terminated) voice call and an SMS message during packet data transmission. Namely, if the class B mobile terminal fails to monitor the CS paging channel, it cannot satisfy service requirements requested for a multimedia communication service.

Meanwhile, when the mobile terminal monitors the CS paging channel periodically regardless of the network type, the packet data throughput can be degraded or data transmission can be abnormally disconnected depending upon the network type (network environment).

US Patent No. 6,728,537 discloses the GPRS paging method, US Patent No. 6,879,820 discloses the packet-switched service and the circuit-switched service, and US Patent No. 6,320,873 discloses the GPRS and the GSM.

### SUMMARY OF THE INVENTION

Therefore, an object of the present invention is to provide a method for monitoring a paging channel of a packet-switched service capable of receiving an MT (Mobile Terminated) voice call and an SMS (Short Message Service) message during packet data transmission, enhancing a data throughput, and preventing a phenomenon that data transmission is abnormally disconnected by monitoring a paging channel of a circuit switched service according to a network type during a packet switched service.

To achieve the above object , there is provided a method for monitoring a paging channel of a packet-switched service including: monitoring a CS paging channel of a mobile communication network when a GPRS (General Packet Radio Service) mode is changed to a packet transfer mode; while monitoring the CS paging channel, if the mobile communication network is a test network, stopping the monitoring; and if the mobile communication network is a real network, determining whether or not to monitor the CS paging channel according to an type of the real network.

To achieve the above object, there is also provided a method for monitoring a paging channel of a packet-switched service, including: monitoring a CS paging channel of a mobile communication network when a GPRS mode is changed to a packet transfer mode; checking whether the mobile communication network is a real network while the CS paging channel is being monitored; if the mobile communication network is a test network, not monitoring the CS paging channel; if the mobile communication network is the real network, setting or resetting a flag for determining whether to monitor the CS paging channel according to an type of the real network; and not monitoring the CS paging channel if the flag is set, and monitoring the CS paging channel if the flag is reset.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention, illustrate embodiments of the invention and together with the description serve to explain the principles of the invention.

In the drawings:
Figure 1 is a block diagram showing a general GPRS logical architecture for explaining the present invention;
Figure 2 is a state diagram showing transitions between operated states of a GPRS mode for explaining the present invention;
Figure 3 is a diagram showing a channel occupancy time according to an operation of monitoring a packet traffic channel (PTCH) and a common control channel (CCCH) in a mobile terminal which does not monitor a CS paging channel in a packet transfer mode, for explaining the present invention;
Figure 4 is a diagram showing a channel occupancy time according to an operation of monitoring the PTCH and the CCCH in the mobile terminal which monitors the CS paging channel in the packet transfer mode;
Figure 5 is a flow chart of an operation of updating a network check block parameter in accordance with the present invention; and
Figure 6 is a flow chart of a method for monitoring a paging channel of a packet-switched service in accordance with the present invention.

### DETAILED DESCRIPTION OF THE INVENTION

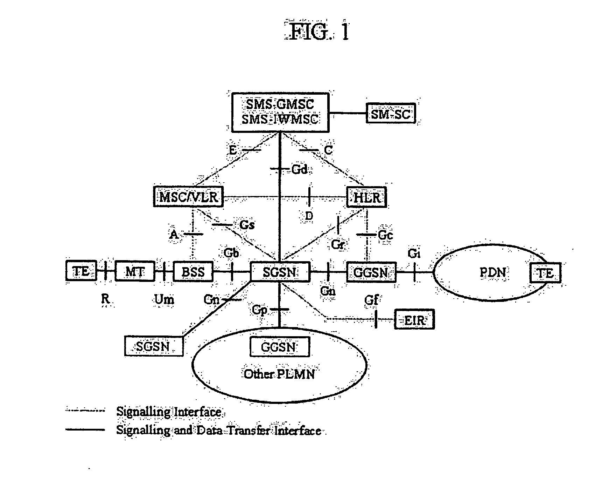

The method for effectively monitoring a paging channel of a circuit-switched (CS) service according to a network type when a GPRS mode is changed to a packet transfer mode, namely, during a packet-switched service in accordance with the present invention will be described with reference to Figures 1 to 6.

Figure 1 is a block diagram showing a general GPRS logical architecture for explaining the present invention.

A GPRS network includes a serving GPRS support node (SGSN) connected with a mobile communication network, and with a packet data network (PDN) via a gateway GPRS support node (GGSN).

The SGSN exchanges information with a mobile switching (MSC)/visitor location register (VLR), a short message switching center (SMSC) and a home location register (HLR) of the mobile communication network through data transfer and signaling interfaces.

The GGSN performs data communication with other public land mobile networks (PLMN) than the mobile communication network, and connects the mobile communication network with the PLMN.

A logical structure of the GPRS is disclosed in US Patent No. 6,879,820, so detailed description for it will be omitted.

The mobile communication network can provide paging coordination for the circuit-switched (CS) service and the packet-switched (PS) service. The paging coordination, which employs the same channel as the channel used for the PS service, means transmission of a paging message for the CS service. The mobile terminal can monitor two channels (CS paging channel and the PS paging channel) in the network supporting the paging coordination.

Network operation modes include network operation modes 1, 2 and 3, and different paging channels are used for the CS paging channel and the GPRS paging channel according to the network operation mode. In addition, according to the network operation mode, paging coordination is supported or not. Table 1 shows paging channels used and whether paging coordination is supported or not according to each network operation mode. [Table 1]

**[Table 1]**

| Mode | Circuit paging channel | GPRS paging channel | Paging coordination |
|---|---|---|---|
| I | Packet paging channel | Packet paging channel | Yes |
| | CCCH paging channel | CCCH paging channel | |
| | Packet data channel | Not applicable | |
| II | CCCH paging channel | CCCH paging channel | No |
| III | CCCH paging channel | Packet paging channel | No |
| | CCCH paging channel | CCCH paging channel | |

The CCCH (Common Control Channel) paging channel is a standard control channel used by the GSM network for setting up a communication link between a mobile terminal and a base station.

In network operation mode I, CS paging messages are transmitted through the same channel as used for the GPRS paging channel. Thus, the mobile terminal monitors only one paging channel in network operation mode I, and when a packet data channel is allocated, the mobile terminal receives the CS paging message through the allocated packet data channel.

In network operation mode II, CS paging messages are transmitted through the CCCH, and the CCCH paging channel is used for paging the GPRS. Although the mobile terminal monitors the CCCH paging channel in network operation mode II, when the mobile terminal allocates the packet data channel, the CS paging is continued through the CCCH paging channel. Accordingly, in network operation mode II, two channels (namely, the CS paging channel and the PS paging channel) must be simultaneously monitored during data transmission.

In network operation mode III, CS paging messages are transmitted through the CCCH paging channel and GPRS paging messages are transmitted through the packet paging channel and the CCCH paging channel. Thus, when the packet paging channel is allocated to a cell, the mobile terminal must monitor the CS paging channel and the PS paging channel.

Network operation mode II is mostly used in the real network, which, however, does not support the paging coordination, so the mobile terminal must monitor the CS paging channel during data transmission.

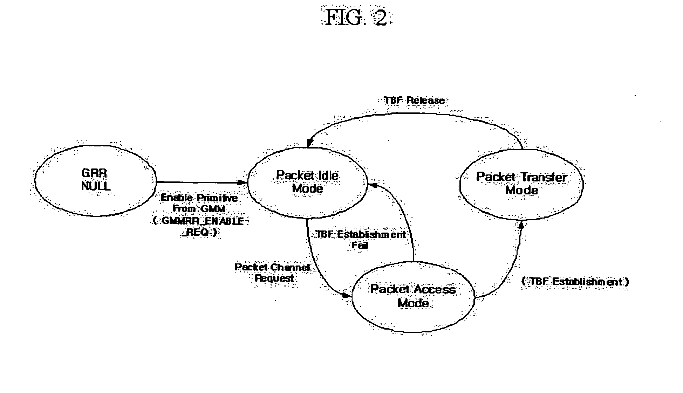

Figure 2 illustrates transitions of operational states in a GPRS network for explaining the present invention.

When GPRS mobility management (GMM) starts in the GPRS mode, the GPRS network mode is changed to a packet idle mode, the packet idle mode is changed to a packet access mode, and the packet access mode is changed to a packet transfer mode according to establishment of a temporary block flow (TBF). When the TBF is released, the packet transfer mode is returned to a packet idle mode. Herein, if the TBF establishment fails in the packet access mode, the packet access mode is changed to the packet idle mode.

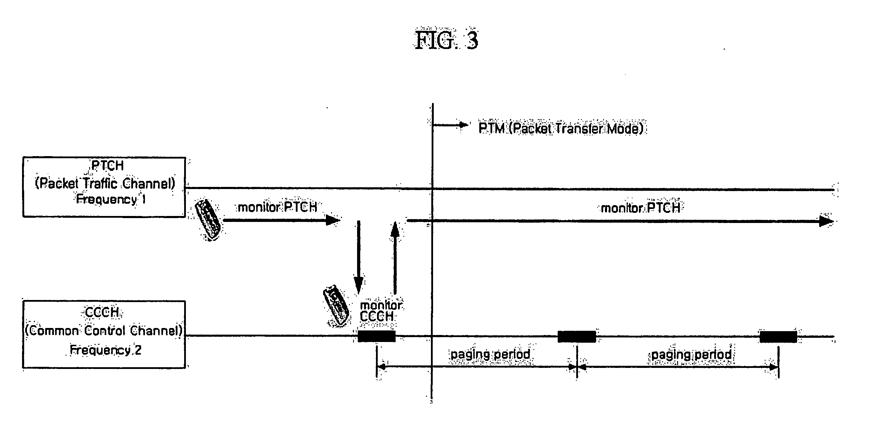

Figure 3 is a diagram for explaining the present invention showing a channel occupancy time according to an operation of monitoring a packet traffic channel (PTCH) and a common control channel (CCCH) in a mobile terminal which does not monitor a CS paging channel in a packet transfer mode.

The mobile terminal which does not monitor the CS paging channel in the packet transfer mode monitors only the PTCH after the packet transfer mode, and accordingly, compared with the mobile terminal which monitors the paging time and the CS paging channel, the data throughput can become fast as much as time taken for re-transmitting an acknowledgement message request signal when the acknowledgement message is not received, but the mobile terminal which does not monitor the CS paging channel cannot cope with a case where a communication provider or a new service requests the CS paging.

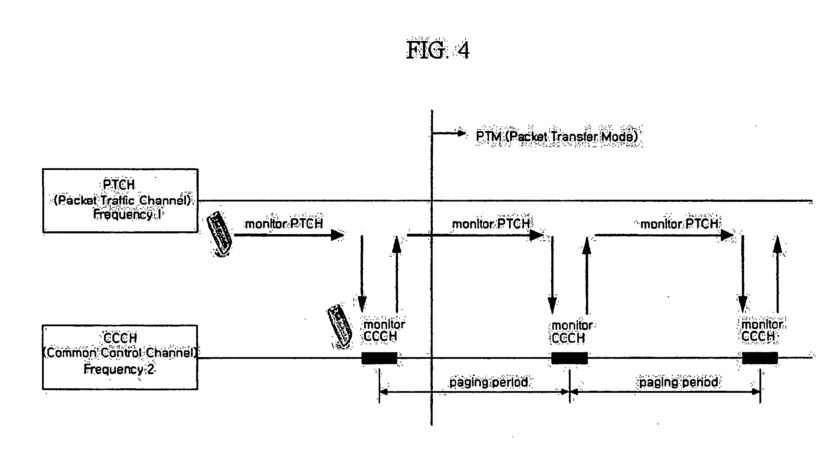

Figure 4 is a diagram showing a channel occupancy time according to an operation of monitoring the PTCH and the CCCH in the mobile terminal which monitors the CS paging channel in the packet transfer mode.

The mobile terminal, which monitors the CS paging channel in the packet transfer mode, wakes up at every paging period of a paging group to which the mobile terminal belongs during a DRX (Discontinuous Reception Operation, i.e., where data is not received except during an interval where data is transmitted) of the packet transfer mode to monitor the PTCH. But while the mobile terminal monitors the CCCH channel, it cannot monitor the PTCH. Thus, if an acknowledge message is transmitted, the mobile terminal fails to receive the acknowledge message, so it re-transmits data, and if the mobile terminal normally receives a poll request message in response to which it is to transmit a packet control acknowledgement (PCA) message but fails to transmit the PCA message, data transfer may be disconnected according to a network implementation. A network typically schedules a message on the CCCH and the PTCH, not causing the disconnection phenomenon, and in this respect, although the network does not schedule the message, the communication link (GPRS link) cannot be disconnected just because the mobile terminal fails to transmit the PCA message one time.

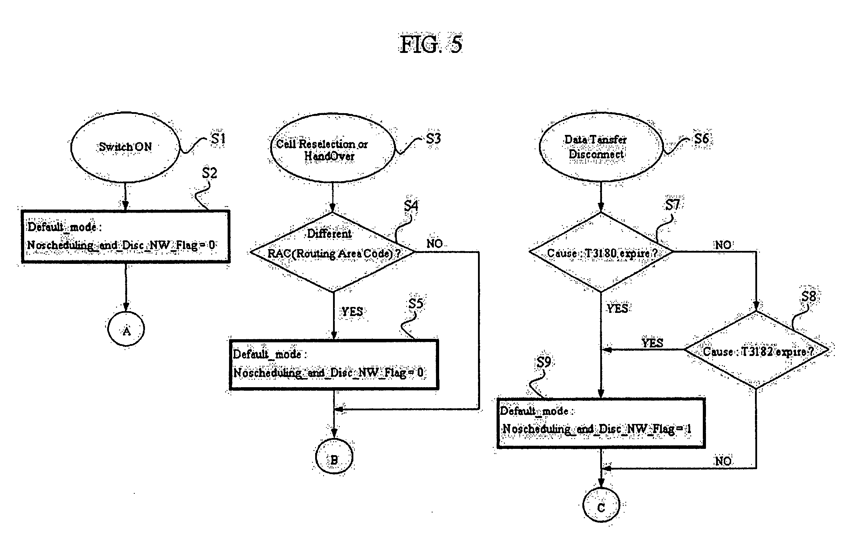

Figure 5 is a flow chart of an operation of updating a network check block parameter in accordance with the present invention. Specifically, Figure 5 shows a process of detecting whether or not a network with which the mobile terminal is interfaced schedules the CS paging channel.

As shown in Figure 5, the operation of updating the network check block parameter includes: resetting a no-scheduling flag of a mobile terminal with a default value when the mobile terminal is initialized; resetting the no-scheduling flag when a cell is re-selected or a routing area code (RAC) such as handover is changed; and setting the no-scheduling flag when data transmission is disconnected after a packet channel is released.

The no-scheduling flag is a network check block parameter and a flag for determining whether to monitor the CS paging channel. Accordingly, resetting of the no-scheduling flag means monitoring of the CS paging channel, and setting of the no-scheduling flag means not monitoring of the CS paging channel.

First, when the mobile terminal is initialized (switch ON) (step S1), the mobile terminal resets the network check block parameter with the default value. Namely, when power is supplied to the mobile terminal, the mobile terminal is initialized and resets the no-scheduling flag with the default value to finish initialization of the network check (No-schedulling_and_Disc_NW_Flag=0) (step S2).

And then, when a cell is changed according to re-selection of a cell and handover (step S3), the RAC and the network type are changed (step S4), so the mobile terminal resets the no-scheduling flag (No-scheduling_and_Disc_NW_Flag=0) (step S5).

When data transmission is disconnected after the packet channel release or when data transmission is normally terminated according to protocol timer T3190 expiration, the mobile terminal resets the no-scheduling flag. Meanwhile, when the data transmission is disconnected after the packet channel release (step S6) or when data transmission is abnormally terminated according to protocol timer T3180/T3182 expiration (steps S7 and S8), the mobile terminal sets the no-scheduling flag to give a priority to maintaining of the communication link (GPRS link) and data transmission (No-scheduling_and_Disc_NW_Flag=1) (step S9).

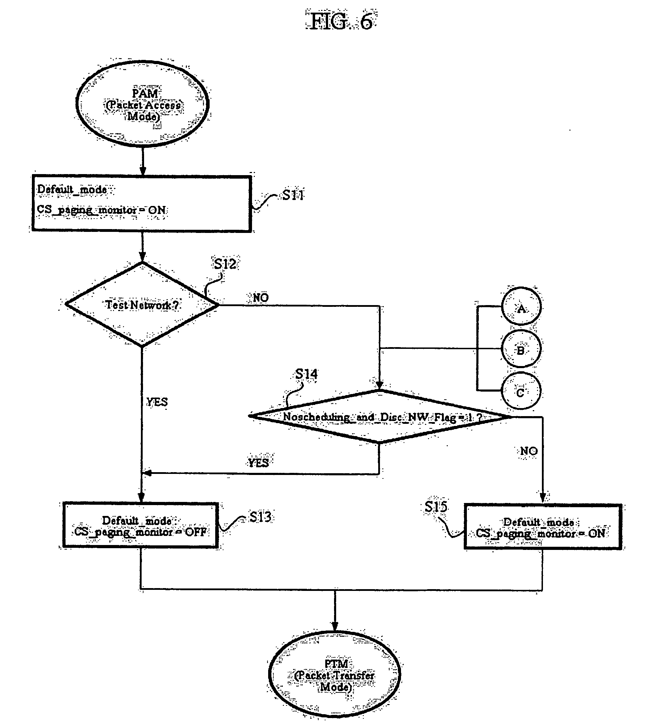

Figure 6 is a flow chart of a method for monitoring a paging channel of a packet-switched service in accordance with the present invention.

As shown in Figure 6, the method for monitoring a paging channel of the packet-switched service includes monitoring a circuit-switched paging channel when a GPRS mode is changed from a packet access mode to a packet transfer mode (CS_paging_monitor=ON); checking whether a mobile communication network with which the mobile terminal is interfaced a test network or a real network while the CS paging channel is being monitored, and if the mobile communication network is the test network, not monitoring the CS paging channel (CS_paging_monitor=OFF); if the mobile communication network is the real network, checking whether or not the real network supports scheduling of a packet traffic channel (PTCH) and a CCCH and whether or not data transmission has been abnormally terminated, and setting or resetting a no-scheduling flag of the mobile terminal; monitoring the CS paging channel if the no-scheduling flag is set, and monitoring the CS paging channel if the no-scheduling flag is reset.

First, when the GPRS mode is changed from the packet access mode to the packet transfer mode, the mobile terminal monitors the CS paging channel (CS_paging_monitor=ON) (step S11).

Thereafter, the mobile terminal checks whether its mobile communication network is a test network or a real network (step S12). If the mobile communication network is a test network, the mobile terminal does not monitor the CS paging channel (CS_paging_monitor=OFF) (step S13).

The test network is a network (i.e., virtual network) for testing the operation of the mobile terminal for GCF (Global Certification Forum)/PTCRB (PCS Type Certification Review Board) testing through testing equipment such as HP8960/CMU200. When the mobile terminal is tested, the mobile terminal does not monitor the circuit-switched paging channel for a stable data transmission and testing. The mobile terminal can determine whether the mobile communication network is the test network or the real network by checking the value of a mobile network code/mobile country code (MNC/MCC), i.e., "network code group". For example, the test network may unconditionally set the value of MNC/MCC as '00101' which is received from testing usage, whereas a real network uses a determined MNC/MCC. Accordingly, the mobile terminal can thereby easily determine whether the mobile communication network is the test network or a real network based on the value of the MNC/MCC network code group transmitted as network system information.

In addition, in case of the test network, the mobile terminal may be designed with such a default mode that the mobile terminal does not monitor the CS paging channel due to an implementation issue. Thus, the test network may not support (i.e., emulate) scheduling of the PTCH and the CCCH.

Accordingly, the mobile terminal determines whether the mobile communication network is the test network or the real network according to the value of MNC/MCC contained in system information received over the network interface, and if the mobile communication network is the real network, the mobile terminal determines in which type the real network operates.

If the mobile communication network is the real network and the no-scheduling flag is reset (No-scheduling_and_Disc_NW_Flag=0), the mobile terminal monitors the CS paging channel (CS_paging_monitor=ON) (steps S14 and S15). If, however, the mobile communication network is the real network and the no-scheduling flag is set (No-scheduling_and_Disc_NW_Flag=1), the mobile terminal does not monitor the circuit-switched paging channel (CS_paging_monitor= OFF) (step S13).

Namely, the mobile terminal checks whether the real network is a network supporting scheduling between the PTCH and the CCCH and whether the network checks for link establishment through re-transmission of data one or more times with reference to the no-scheduling flag which has been updated through the updating operation of the network check block parameter as described above, and accordingly monitors or does not monitor the CS paging channel.

For example, if the real network supports scheduling between the PTCH and the CCCP and checks for the link establishment through re-transmission of data one or more times, the mobile terminal can receive an MT (Mobile Terminated) voice call or an SMS message during data transmission by monitoring the CS paging channel. Namely, the service requirements requested for performing a multimedia service can be satisfied.

Meanwhile, if the real network does not support scheduling between the PTCH and the CCCH and checks the link establishment through only one time data transmission checking, the mobile terminal does not monitor the circuit-switched paging channel to thereby avoid such a worst case situation that data transmission is disconnected.

As so far described, the method for monitoring the paging channel of the packet- switched service has the following advantages.

That is, for example, by monitoring the CS paging channel according to a network type in the packet transfer mode, the mobile terminal can receive an MT voice call and an SMS message during packet data transmission, the data throughput can be enhanced, and the phenomenon that data transmission is abnormally disconnected can be prevented.

## Claims

1. A method for monitoring a paging channel of a packet-switched service comprising:
monitoring (S11) a paging channel of a mobile communication network when a General Packet Radio Service mode is changed to a packet transfer mode;
stopping (S13) the monitoring of the paging channel when the mobile communication network is a test network; and
controlling (S14, S15) monitoring of the paging channel according to a type of a real network, when the mobile communication network is a real network.

2. The method of claim 1, wherein the paging channel is a circuit switched paging channel.

3. The method of claim 2, wherein the step of controlling monitoring of the circuit switched paging channel comprises:
monitoring the circuit switched paging channel when the real network supports scheduling of a packet traffic channel (PTCH) and a common control channel (CCCH) and checks for communication link establishment through re-transmission of data one or more times.

4. The method of claim 3, wherein the step of controlling monitoring of the circuit switched paging channel comprises:
stopping the monitoring the circuit switched paging channel when the real network does not support the scheduling of the packet traffic channel and the common control channel and checks the communication link establishment through only one time data transmission checking.

5. The method of claim 2, wherein the step of controlling monitoring of the circuit switched paging channel comprises:
controlling the monitoring of the circuit switched paging channel by checking whether or not the real network supports the scheduling of a packet traffic channel (PTCH) and a common control channel (CCCH) or whether or not data transmission has been abnormally terminated.

6. The method of claim 1, further comprising:
checking (S12) whether the mobile communication network is the test network or the real network by checking a mobile network code/mobile country code of the mobile communication network.

7. A method for monitoring a paging channel of a packet-switched service, comprising:
monitoring (S11) a circuit switched paging channel of a mobile communication network when a General Packet Radio Service mode is changed to a packet transfer mode;
checking (S12) whether the mobile communication network is a real network or a test network while the circuit switched paging channel is being monitored;
stopping (S13) the monitoring of the circuit switched paging channel when the mobile communication network is a test network;
setting or resetting a flag for determining whether to monitor the circuit switched paging channel according to an operational type of the real network, when the mobile communication network is a real network; and
stopping (S13) the monitoring of the circuit switched paging channel when the flag is set, and monitoring the circuit switched paging channel when the flag is reset.

8. The method of claim 7, wherein, in the step of setting or resetting the flag, the flag is set or reset by checking whether or not the real network supports the scheduling of a packet traffic channel and a common control channel or whether or not a data transmission has been abnormally terminated.

9. The method of claim 7, wherein the step of setting or resetting the flag comprises:
resetting the flag with a default value when the mobile terminal is initialized;
resetting the flag when a routing area code is changed; and
setting the flag when data transmission is abnormally terminated after packet a channel is released.

10. The method of claim 7, wherein, in the step of checking (S12) whether the mobile communication network is the real network or the test network, the mobile communication network is checked to be the test network or the real network by checking a mobile network code / mobile country code of the mobile communication network.

## Patentansprüche

1. Verfahren zur Überwachung eines Rufkanals eines paketvermittelten Dienstes, umfassend
- Überwachen (S11) eines Rufkanals eines Mobilkommunikationsnetzes, wenn der Modus eines allgemeinen paketorientierten Funkdienstes auf einen Paketübermittlungsmodus umgestellt wird,
- Anhalten (S13) der Überwachung des Rufkanals, wenn das Mobilkommunikationsnetz ein Testnetz ist, und
- Steuern (S14, S15) der Überwachung des Rufkanals nach Maßgabe des Typs eines realen Netzes, wenn das Mobilkommunikationsnetz ein reales Netz ist.

2. Verfahren nach Anspruch 1, wobei der Rufkanal ein leitungsvermittelter Rufkanal ist.

3. Verfahren nach Anspruch 2, wobei der Schritt der Überwachungssteuerung des leitungsvermittelten Rufkanals umfasst:
- Überwachen des leitungsvermittelten Rufkanals, wenn das reale Netz die Zeitablaufsteuerung eines Paketverkehrskanals (PTCH) und eines gemeinsamen Steuerkanals (CCCH) unterstützt und die Herstellung einer Kommunikationsverbindung durch einmalige oder mehrmalige wiederholte Übertragung von Daten prüft.

4. Verfahren nach Anspruch 3, wobei der Schritt der Überwachungssteuerung des leitungsvermittelten Rufkanals umfasst:
- Anhalten der Überwachung des leitungsvermittelten Rufkanals, wenn das reale Netz keine Zeitablaufsteuerung des Paketverkehrskanals und des gemeinsamen Steuerkanals unterstützt und die Herstellung einer Kommunikationsverbindung allein durch einmalige Datenübermittlungsprüfung prüft.

5. Verfahren nach Anspruch 2, wobei der Schritt der Überwachungssteuerung des leitungsvermittelten Rufkanals umfasst:
- Steuern der Überwachung des leitungsvermittelten Rufkanals durch Prüfen, ob das reale Netz die Zeitablaufsteuerung eines Paketverkehrskanals (PTCH) und eines gemeinsamen Steuerkanals (CCCH) unterstützt oder nicht oder ob eine Datenübermittlung außerordentlich abgebrochen wurde oder nicht.

6. Verfahren nach Anspruch 1, ferner umfassend:
- Prüfen (S12), ob das Mobilkommunikationsnetz das Testnetz oder das reale Netz ist, und zwar durch Prüfen eines mobilen Netzwerkcodes / mobilen Ländercodes des Mobilkommunikationsnetzes.

7. Verfahren zur Überwachung eines Rufkanals eines paketvermittelten Dienstes, umfassend:
- Überwachen (S11) eines leitungsvermittelten Rufkanals eines Mobilkommunikationsnetzes, wenn der Modus eines allgemeinen paketorientierten Funkdienstes auf einen Paketübertragungsmodus umgestellt wird,
- Prüfen (S12), ob das Mobilkommunikationsnetz ein reales Netz oder ein Testnetz ist, und zwar während der leitungsvermittelte Rufkanal überwacht wird,
- Anhalten (S13) der Überwachung des leitungsvermittelten Rufkanals, wenn das Mobilkommunikationsnetz ein Testnetz ist,
- Setzen oder Rücksetzen eines Merkers für die Bestimmung, ob der leitungsvermittelte Rufkanal überwacht werden soll, und zwar nach Maßgabe des Betriebstyps eines realen Netzes, sofern das Mobilkommunikationsnetz ein solches reales Netz ist, und
- Anhalten (S13) der Überwachung des leitungsvermittelten Rufkanals, wenn der Merker gesetzt wird, und Überwachen des leitungsvermittelten Rufkanals, wenn der Merker rückgesetzt wird.

8. Verfahren nach Anspruch 7, wobei bei dem Schritt des Setzens oder Rücksetzens des Merkers der Merker gesetzt oder rückgesetzt wird, indem geprüft wird, ob das reale Netz die Zeitablaufsteuerung eines Paketverkehrskanals und eines gemeinsamen Steuerkanals unterstützt oder nicht oder ob eine Datenübermittlung außerordentlich abgebrochen wurde oder nicht.

9. Verfahren nach Anspruch 7, wobei der Schritt des Setzens oder Rücksetzens des Merkers umfasst:
- Rücksetzen des Merkers auf einen voreingestellten Wert, wenn das mobile Endgerät initialisiert wird,
- Rücksetzen des Merkers, wenn sich ein Routing-Area-Code ändert, und
- Setzen des Merkers, wenn eine Datenübermittlung nach Freigabe eines Paketkanals außerordentlich abgebrochen wird.

10. Verfahren nach Anspruch 7, wobei bei dem Schritt der Überprüfung (S12), ob das Mobilkommunikationsnetz das reale Netz oder das Testnetz ist, das Mobilkommunikationsnetz durch Prüfung eines mobilen Netzwerkcodes / mobilen Ländercodes des Mobilkommunikationsnetzes darauf untersucht wird, ob es das Testnetz oder das reale Netz ist.

## Revendications

1. Procédé pour la surveillance d'un canal d'appel d'un service de commutation par paquets comprenant :
la surveillance (S11) d'un canal d'appel d'un réseau de communication mobile lorsqu'un mode du service général de radiocommunication par paquets est changé en un mode de transfert de paquets ;
l'arrêt (S13) de la surveillance du canal d'appel lorsque le réseau de communication mobile est un réseau de test ; et
le contrôle (S14, S15) de la surveillance du canal d'appel selon un type de réseau réel, lorsque le réseau de communication mobile est un réseau réel.

2. Procédé selon la revendication 1, dans lequel le canal d'appel est un canal d'appel à commutation de circuits.

3. Procédé selon la revendication 2, dans lequel l'étape consistant à contrôler la surveillance du canal d'appel à commutation de circuits comprend :
la surveillance du canal d'appel à commutation de circuits lorsque le réseau réel supporte la planification d'un canal de trafic de paquets (PTCH) et d'un canal de signalisation commun (CCCH) et vérifie l'établissement d'une liaison de communication par une retransmission des données en une ou plusieurs fois.

4. Procédé selon la revendication 3, dans lequel l'étape consistant à contrôler la surveillance du canal d'appel à commutation de circuits comprend :
l'arrêt de la surveillance du canal d'appel à commutation de circuits lorsque le réseau réel ne supporte pas la planification du canal de trafic de paquets et du canal de signalisation commun et vérifie l'établissement d'une liaison de communication par seulement une vérification de transmission de données en une fois.

5. Procédé selon la revendication 2, dans lequel l'étape consistant à contrôler la surveillance du canal d'appel à commutation de circuits comprend :
le contrôle de la surveillance du canal d'appel à commutation de circuits en vérifiant si le réseau réel supporte ou non la planification d'un canal de trafic de paquets (PTCH) et d'un canal de signalisation commun (CCCH) ou si la transmission des données a été terminée anormalement ou non.

6. Procédé selon la revendication 1, comprenant en outre :
la vérification (S12) si le réseau de communication mobile est le réseau de test ou le réseau réel en vérifiant un code de réseau mobile/un code pays mobile du réseau de communication mobile.

7. Procédé pour la surveillance d'un canal d'appel d'un service de commutation par paquets, comprenant :
la surveillance (S11) d'un canal d'appel à commutation de circuits d'un réseau de communication mobile lorsqu'un mode du service général de radiocommunication par paquets est changé en un mode de transfert de paquets ;
la vérification (S12) si le réseau de communication mobile est un réseau réel ou un réseau de test pendant que le canal d'appel à commutation de circuits est surveillé ; l'arrêt (S13) de la surveillance du canal d'appel à commutation de circuits lorsque le réseau de communication mobile est un réseau de test ;
l'initialisation ou la réinitialisation d'un indicateur pour déterminer s'il faut surveiller le canal d'appel à commutation de circuits selon un type opérationnel du réseau réel, lorsque le réseau de communication mobile est un réseau réel ; et
l'arrêt (S13) de la surveillance du canal d'appel à commutation de circuits lorsque l'indicateur est initialisé, et la surveillance du canal d'appel à commutation de circuits lorsque l'indicateur est réinitialisé.

8. Procédé selon la revendication 7, dans lequel, dans l'étape d'initialisation ou de réinitialisation de l'indicateur, l'indicateur est initialisé ou réinitialisé en vérifiant si le réseau réel supporte ou non la planification d'un canal de trafic de paquets et d'un canal de signalisation commun ou si une transmission des données a été terminée anormalement ou non.

9. Procédé selon la revendication 7, dans lequel l'étape consistant à initialiser ou réinitialiser l'indicateur comprend :
la réinitialisation de l'indicateur avec une valeur par défaut lorsque le terminal mobile est initialisé ;
la réinitialisation de l'indicateur lorsqu'un code régional de routage est changé ; et
l'initialisation de l'indicateur lorsque la transmission des données est terminée anormalement après qu'un paquet d'un canal soit libéré.

10. Procédé selon la revendication 7, dans lequel, dans l'étape de vérification (S12) si le réseau de communication mobile est le réseau réel ou le réseau de test, le réseau de communication mobile est vérifié comme étant le réseau de test ou le réseau réel en vérifiant un code de réseau mobile/un code pays mobile du réseau de communication mobile.
